# FASCICULE DE BREVET EUROPEEN

(11) **EP 1 461 561 B1**
(45) Date de publication et mention de la délivrance du brevet: **31.08.2005**
(21) Numéro de dépôt: 02801175.7
(22) Date de dépôt: 24.12.2002
(51) Int. Cl.: F16L 15/06

(54) **JOINT FILETE TUBULAIRE COMPORTANT DES SURFACES D'ETANCHEITE**
ROHRFÖRMIGE SCHRAUBVERBINDUNG MIT DICHTFLÄCHEN
THREADED TUBULAR JOINT COMPRISING SEALING SURFACES

(30) Priorité: 03.01.2002 FR 0200053
(43) Date de publication de la demande: 29.09.2004
(73) Titulaire: VALLOUREC MANNESMANN OIL & GAS FRANCE, 59620 Aulnoye-Aymeries (FR)
(72) Inventeur: DURAND, Antoine, F-59300 Valenciennes (FR); FILIPPOV, Andrei, G., NL-2280 AB RIJSWIJK (NL)
(74) Mandataire: Rousset, Jean-Claude
(86) Numéro de dépôt international: PCT/FR2002/004545
(87) Numéro de publication internationale: WO 2003/060369

(56) Documents cités:
- EP-A- 0 329 990
- EP-A- 0 570 657
- US-A- 4 009 893
- US-B1- 6 322 110

## Description

L'invention concerne un joint tubulaire, notamment du genre utilisé pour des puits d'hydrocarbures ou pour des puits similaires, par exemple en géothermie.

Un tel joint peut exister entre deux tubes de grande longueur, ou entre un tube de grande longueur et un manchon. Ces joints sont utilisés notamment pour assembler des colonnes de tubes de cuvelage ("casings") ou de production ("tubings"). Compte tenu des caractéristiques mécaniques exigées, les tubes de cuvelage et ceux de production sont généralement en acier traité thermiquement.

De leur côté, les joints doivent tenir en traction, en compression, en flexion et parfois en torsion, ainsi qu'à de forts écarts de pression dans les deux sens entre l'intérieur et l'extérieur. Et ils doivent même être étanches aux gaz, au moins dans certains cas. Les joints filetés sont particulièrement avantageux à cet égard.

Mais il est actuellement envisagé de soumettre les tubes, in situ, à une expansion diamétrale, avec déformation plastique permanente. Ceci offre différents avantages, sur lesquels on reviendra. Encore faut-il que les joints restent opérationnels, après la déformation plastique d'expansion diamétrale, qu'ils subissent comme les tubes. Ainsi, il est souhaitable que les joints filetés tiennent après expansion diamétrale plastique, en conservant l'essentiel des propriétés qui les font apprécier, notamment de tenue mécanique en traction/compression, avec ou sans surpression interne ou externe, ainsi que d'étanchéité.

Comme on le verra plus loin en détail, les joints classiques ne donnent pas entière satisfaction: ou bien ils ne tiennent pas ces exigences, ou bien ils les tiennent de manière aléatoire, ou bien ils les tiennent, mais non de manière répétée.

Dans la demande internationale PCT/FR01/02005 non encore publiée de la Demanderesse, il est proposé une structure de joint prévue pour tenir l'expansion diamétrale plastique.

L'étanchéité des joints tubulaires dépend de l'aire effective de contact des surfaces d'étanchéité, laquelle est affectée par la présence d'aspérités résultant de l'usinage de ces surfaces. En outre, un arrachement de ces aspérités est susceptible de se produire lorsque les surfaces d'étanchéité des deux éléments tubulaires glissent l'une sur l'autre au cours de l'assemblage du joint, et également au cours de l'expansion radiale dans le cas où celle-ci est prévue, détériorant ainsi encore la qualité de leur contact.

Le but de l'invention est de remédier à tout ou partie de ces inconvénients.

L'invention concerne un joint tubulaire comprenant un premier élément tubulaire et un second élément tubulaire propres à être mutuellement assemblés avec insertion d'une première région du premier élément tubulaire dans une seconde région du second élément tubulaire, lesdites première et seconde régions comportant des surfaces d'étanchéité respectives propres à venir en contact mutuel étanche dans un état final du joint à l'issue d'une expansion radiale de celui-ci.

On entend ici par "contact étanche" un contact entre deux surfaces fortement pressées l'une contre l'autre de manière à réaliser une étanchéité métal sur métal.

L'invention prévoit notamment que l'une au moins desdites surfaces d'étanchéité est munie d'un revêtement adhérent comportant un matériau plus ductile que le matériau du substrat et d'une épaisseur supérieure à 17 µm, propre à augmenter l'aire effective de contact desdites surfaces d'étanchéité.

Des caractéristiques optionnelles de l'invention, complémentaires ou de substitution, sont énoncées ci-après:
- L'épaisseur du revêtement est d'au moins 20 µm.
- L'épaisseur du revêtement est comprise entre 35 et 50 µm.
- Pour un substrat en acier ou en alliage de nickel, ledit matériau plus ductile est choisi parmi le cuivre, le plomb, le zinc, l'étain et leurs alliages.
- Les premier et second éléments tubulaires sont propres à être mutuellement assemblés par vissage d'un filetage mâle du premier élément tubulaire dans un filetage femelle du second élément tubulaire.
- Lesdits filetages sont coniques de conicité au plus égale à 12,5 %.
- Lesdits filetages sont cylindriques à au moins deux étages de diamètres différents.
- Chacune desdites surfaces d'étanchéité est située entre deux étages de filetage.
- Ladite première région comporte une partie annulaire ayant une face de butée saillante et ladite seconde région comporte un logement, homologue de ladite partie annulaire, ayant une face de butée rentrante, les deux faces de butée permettant, au montage, de contrôler le couple de vissage des premier et second filetages l'un sur l'autre et d'insérer la première région dans la seconde région.
- La surface périphérique extérieure de ladite partie annulaire est disposée à faible jeu de la surface périphérique intérieure du logement.
- Lesdites surfaces d'étanchéité appartiennent respectivement à la surface périphérique extérieure de ladite partie annulaire et à la surface périphérique intérieure du logement.
- Ladite première région est située à l'extrémité libre du premier élément tubulaire, ladite partie annulaire formant une lèvre.
- La face de butée saillante comporte une languette annulaire se projetant axialement et une surface transversale reliant la languette annulaire à la surface radialement intérieure du premier élément tubulaire et la face de butée rentrante comporte une rainure annulaire et une surface transversale reliant la rainure annulaire à la surface radialement intérieure du second élément tubulaire, la languette s'engageant dans la rainure et la surface transversale de la face de butée saillante venant en regard de la surface transversale de la face de butée rentrante.
- La surface périphérique extérieure de la languette annulaire est dans le prolongement de la surface périphérique extérieure de ladite partie annulaire la surface périphérique intérieure de la rainure annulaire est dans le prolongement de la surface périphérique intérieure du logement.
- L'épaisseur radiale (e_{d}) de la languette est sensiblement égale à celle de la surface transversale de la face de butée rentrante.
- Le rapport entre la hauteur mesurée axialement (h_{d}) de la languette (13) et son épaisseur radiale (e_{d}) est compris entre 0,8 et 1,6.
- La hauteur mesurée axialement (h_{d}) de la languette est comprise entre 0,8 et 3 mm.
- La hauteur axiale (hᵣ) de la languette et la profondeur axiale (Pᵣ) de la rainure sont telles que, lors du vissage du joint fileté, le premier contact en butée a lieu entre l'extrémité libre transversale de la languette et le fond de la rainure.
- L'élément mâle présente une gorge en extrémité du filetage mâle entre filetage et lèvre mâle.
- La gorge a une profondeur (h_{g}) au plus égale à la hauteur des filets mâles.
- La gorge a une largeur axiale totale (l_{g}) et une profondeur (h_{g}) telles que sa largeur axiale est comprise entre 2 et 15 fois sa profondeur.
- Domaine des déformations plastiques, les surfaces d'étanchéité frettant l'une sur l'autre sur toute leur périphérie.
- L'expansion diamétrale subie par le joint fileté tubulaire est au moins égale à 10 %.

L'invention a également pour objet un procédé de réalisation d'un joint fileté tubulaire étanche caractérisé en ce que l'on part d'un joint fileté tubulaire tel que défini ci-dessus dit "joint fileté tubulaire initial" et en ce qu'on fait subir à ce joint fileté initial une expansion diamétrale dans le domaine des déformations plastiques à l'aide d'un boulet d'expansion de diamètre supérieur au diamètre intérieur (DI) des éléments tubulaires du joint fileté qui est déplacé axialement dans le joint fileté, la lèvre mâle et le logement femelle étant dimensionnés de manière à subir d'abord ensemble lors du passage du boulet une déformation plastique de flexion alors que seul le logement femelle subit ensuite une déformation plastique en sens inverse de redressement, ce qui vient fretter finalement une surface d'étanchéité de la partie annulaire de la lèvre mâle par une surface d'étanchéité du logement femelle.

Le procédé selon l'invention peut comporter au moins certaines des particularités suivantes:
- La flexion de la lèvre mâle est délimitée par la présence d'une gorge à l'extrémité de la lèvre mâle du côté du filetage mâle.
- Le joint fileté tubulaire mis en oeuvre est du type intégral et le boulet d'expansion est déplacé de l'élément fileté mâle vers l'élément fileté femelle.

Les caractéristiques et avantages de l'invention seront exposés plus en détail dans la description ci-après, en se référant aux dessins annexés.
La figure 1 représente un joint fileté selon l'invention avant expansion diamétrale.
La figure 2 représente l'élément mâle du joint fileté de la figure 1.
La figure 3 représente l'élément femelle du joint fileté de la figure 1.
Les figures 4 à 7 représentent le joint fileté selon l'invention à diverses étapes du processus d'expansion.

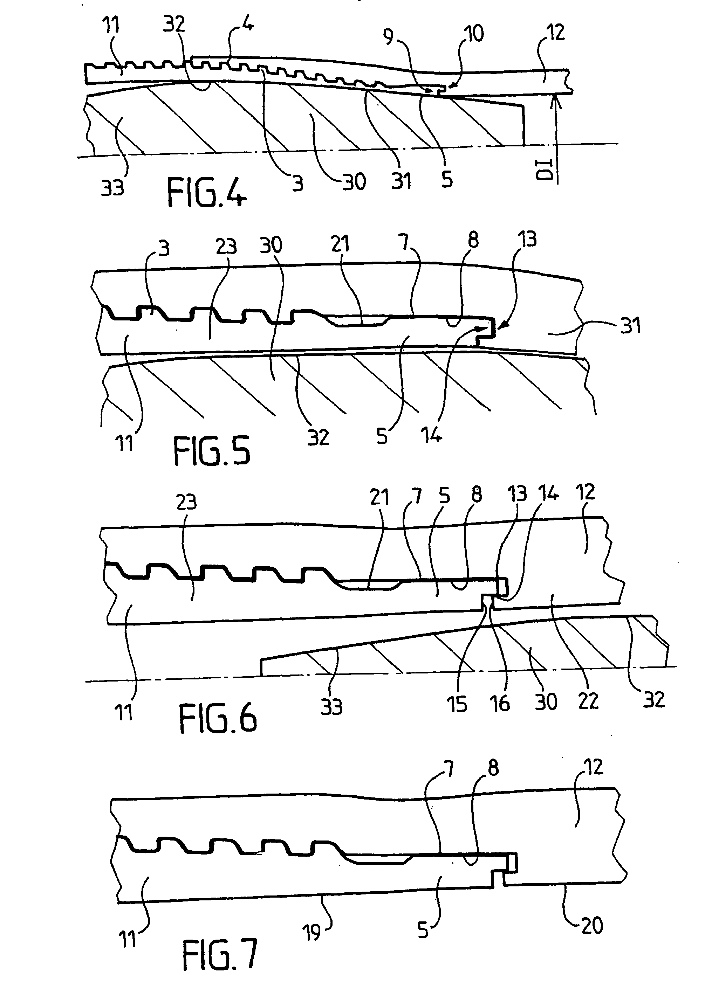

La figure 4 représente la phase d'expansion du joint fileté.
La figure 5 représente la phase de flexion.
La figure 6 représente la phase de redressement.
La figure 7 représente l'état final du joint fileté ayant subi le processus d'expansion.

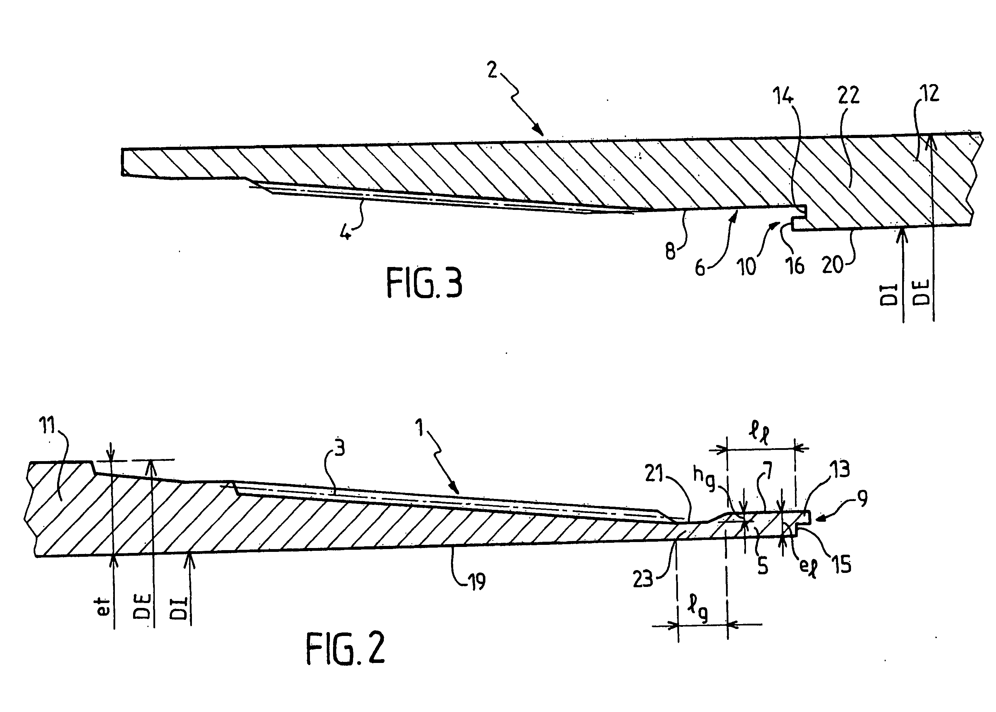

Les figures 8 et 9 représentent à plus grande échelle des détails de la lèvre et du logement illustrés sur les figures 2 et 3 respectivement.

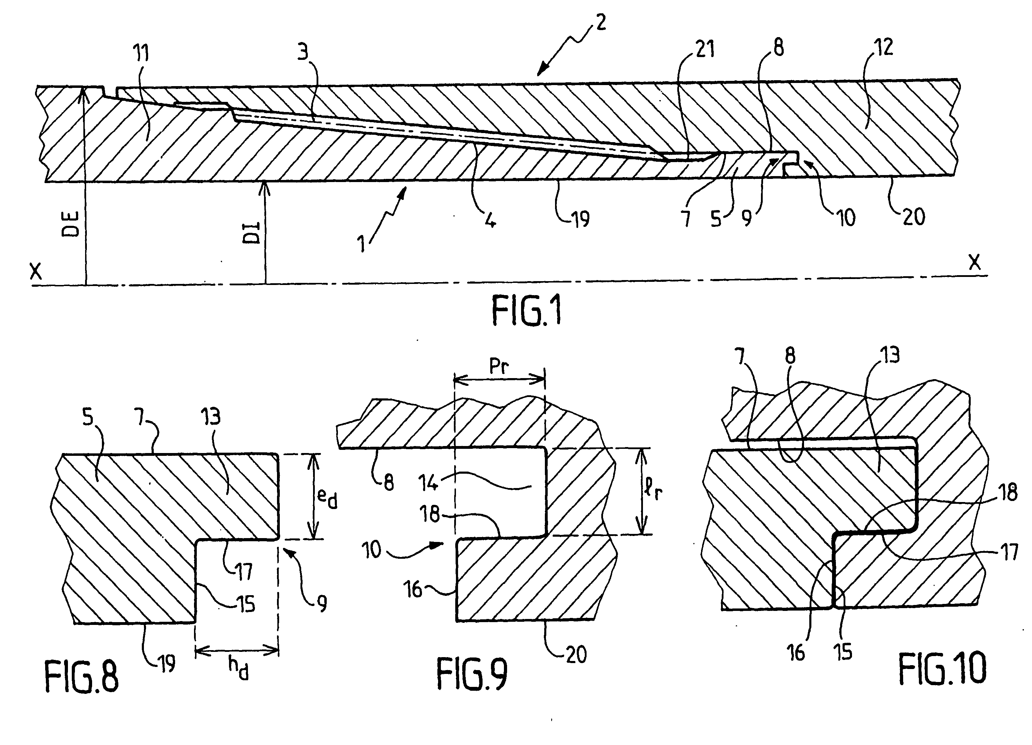

La figure 10 représente à plus grande échelle un détail de la figure 1.

On revient ici sur le forage de puits, pour hydrocarbures ou géothermie par exemple.

Traditionnellement, le haut d'un puits est d'abord foré sur une profondeur relativement faible de quelques dizaines de mètres à l'aide d'un outil de gros diamètre, de l'ordre par exemple de 500 mm, et est cuvelé à l'aide d'une colonne de tubes de ce diamètre. Le diamètre de forage diminue ensuite par pas jusqu'au fond du puits qui peut être foré avec un diamètre nettement plus faible, de l'ordre de 150 mm dans le même exemple. Un tel puits est alors cuvelé à l'aide de plusieurs colonnes de tubes concentriques, descendues chacune en fin de forage au diamètre correspondant et toutes suspendues depuis la surface; les tubes de plus gros diamètre s'étendent depuis la surface jusqu'à quelques dizaines de mètres de profondeur et les tubes de plus petit diamètre s'étendent depuis la surface jusqu'au fond du puits, dont la profondeur peut atteindre plusieurs milliers de mètres. L'espace entre les tubes de cuvelage et le terrain est par exemple cimenté.

Après que le puits est entièrement foré et cuvelé, une colonne de tubes de production peut être descendue pour permettre notamment la remontée des hydrocarbures jusqu'à la surface, c'est-à-dire l'exploitation effective du puits. On comprend que cette colonne de tubes de production possède un diamètre extérieur légèrement inférieur au diamètre intérieur de la colonne de tubes de cuvelage.

Équiper un puits conduit donc à mettre en oeuvre un grand nombre de tubes de différentes dimensions le plus souvent assemblés à l'aide de joints filetés compte tenu des avantages de ce type d'assemblage. On cherche à rendre ces tubes les plus minces possibles, pour ne pas nécessiter de trop gros diamètres de tubes de cuvelage près de la surface. Or le respect des contraintes et spécifications applicables aux joints filetés conduit souvent à leur donner une épaisseur plus grande que celle de la partie courante des tubes; ce qui oblige à augmenter la progression diamétrale entre colonnes concentriques, lorsqu'on descend en profondeur dans le puits.

L'assemblage des tubes entre eux a lieu soit par vissage des extrémités filetées des tubes les unes dans les autres (joints dits intégraux), soit à l'aide de manchons filetés recouvrant leurs extrémités. Les tubes sont descendus successivement après vissage dans l'extrémité du tube ou du manchon précédent.

La spécification API 5 CT de l'American Petroleum Institute (API) définit ainsi des joints filetés tubulaires entre deux tubes de grande longueur ("integral-joint tubing", "extreme-ligne casing"), ainsi que des assemblages filetés manchonnés comportant deux joints filetés permettant d'assembler deux tubes de grande longueur à l'aide d'un manchon. Ces joints API ne sont étanches que par l'adjonction d'une graisse chargée de particules métalliques qui remplit les interstices entre filets.

Bien entendu les liaisons entre tubes (ou entre tubes et manchons) doivent rester étanches quelles que soient les sollicitations que les tubes subissent lors de leur descente dans le puits et en service, et dans une large limite de masse supportée, puisque chaque joint soutient au moins partiellement des tubes situés au-dessous de lui. Aussi les performances mécaniques des joints filetés apparaissent-elles intimement liées à leurs caractéristiques géométriques.

Dans les joints filetés standards selon API, il existe toujours, malgré l'utilisation de graisses chargées de particules, un canal de fuite dans lequel un fluide à haute pression peut circuler du fait du jeu existant entre les surfaces non en contact. Pour une charge donnée en traction, il existe un seuil de pression du fluide, au-delà duquel l'effort combiné de traction et pression provoque sur les joints filetés API d'abord une fuite pouvant entraîner un désengrènement des filetages des parties mâles et femelles en contact.

Les joints et assemblages filetés ont fait l'objet, pour éviter cela, de différents perfectionnements: par exemple les brevets FR 1489013, EP 0488912, US 4494777 ont visé à réaliser des joints filetés tubulaires dits supérieurs ou "premium" particulièrement étanches grâce à des portées d'étanchéité métal-métal interférant radialement l'une sur l'autre et à des butées entre éléments mâles et femelles judicieusement arrangées de manière à garantir une plage donnée d'interférence entre portées d'étanchéité.

Comme indiqué, après descente d'une colonne tubulaire dans un puits, on envisage de soumettre celle-ci à une expansion diamétrale, avec déformation plastique permanente. Ceci se fait par exemple à l'aide d'un boulet dont le passage est forcé à l'intérieur de la colonne: voir brevets ou demandes de brevet WO 93/25799, WO 98/00626, WO 99/06670, WO 99/35368, WO 00/61915, GB 2344606, GB 2348657. Ceci offre des potentialités très intéressantes:
- descendre une colonne de faible encombrement, qui est ensuite expansée à force;
- mettre en place de cette façon une colonne de tubes de cuvelage,
- de même, colmater in situ les trous d'un tube de cuvelage ou de production percé par la corrosion ou par le frottement des tiges de forage, ou bien descendre dans le puits des tubes de faible encombrement qui seront expansés au diamètre souhaité une fois en place.
- enfin et surtout, permettre de forer des puits de diamètre uniforme sur toute leur longueur, dont le cuvelage est réalisé par une colonne de tubes tous de même diamètre, des parties de colonnes étant introduites à l'état non expansé, puis étant expansées in situ au diamètre de parties de colonnes expansées déjà en place et raboutées à celles-ci.

Il serait alors possible de diminuer fortement le nombre de tubes nécessaires pour équiper un puits, en supprimant les tubes de plus gros diamètre et de plus forte épaisseur. Le coût du puits est diminué en conséquence. Il peut même être envisagé de forer le puits directement avec la colonne de tubes de cuvelage, qui jouerait le rôle de train de tiges de forage.

Il s'est avéré que réaliser des joints filetés qui tiennent leurs performances après une expansion pouvant dépasser 10 % voire atteindre 25 % est extrêmement délicat, d'autant plus que ceci doit être fiable (tous les joints doivent tenir) et stable dans les conditions de fonctionnement.

On connaît par US 5924745 et WO 98/42947 des assemblages filetés tenant l'expansion. Mais il s'agit ici d'assembler des tubes dits EST (expandable slotted tubings), munis de fentes longitudinales traversantes, et sujets à expansion diamétrale au fond de puits d'hydrocarbures (par passage d'un mandrin d'expansion dans ces tubes); élargies, les fentes permettent à un fluide extérieur au tube (hydrocarbure provenant du gisement) d'entrer dans le tube pour y être remonté en surface. Dans ce cas, l'étanchéité des assemblages n'a manifestement pas d'importance, et, étant en fond de puits, ils n'ont pas une aussi grande charge mécanique.

En fait, les premières propositions d'expansion plastique de colonnes tubulaires étanches se fondent sur des joints soudés (bobines de tubes aboutés préalablement par soudage, déroulées depuis la surface) ou encore sur des joints frottants ("slips"). Mais de tels joints ne possèdent pas les performances des joints filetés, en particulier en ce qui concerne la combinaison de la résistance mécanique, de l'étanchéité en toutes conditions de service, et aussi de la possibilité de démontage/remontage plusieurs fois de suite.

Il s'est avéré que les joints filetés tubulaires classiques tels que ceux selon le brevet US 4494777 ne supportent pas l'expansion diamétrale plastique. On constate après expansion sur ces joints:
- une absence d'étanchéité (qui empêche accessoirement de réaliser l'expansion en poussant hydrauliquement le boulet dans la colonne);
- une flèche de l'extrémité mâle vers l'intérieur du joint qui réduit considérablement et de manière inacceptable le diamètre intérieur opérationnel de la colonne en réalisant une saillie intérieure dans l'espace défini par le diamètre intérieur opérationnel;
- éventuellement la rupture de la lèvre d'extrémité mâle par dépassement de la capacité de déformation de certaines zones particulièrement sollicitées du fait des variations d'épaisseur tout au long des éléments mâles et femelles par rapport à l'épaisseur au corps du tube.

On a donc cherché à réaliser un joint fileté tubulaire qui soit apte à résister à l'opération d'expansion dans le puits et qui soit étanche aux liquides voire si possible aux gaz après ladite opération d'expansion. On a aussi cherché à ce que le joint fileté tubulaire soit simple et économique à produire. On a en outre cherché à ce que le joint fileté possède de bonnes caractéristiques métallurgiques en service donc après expansion, notamment à ce qu'il présente dans cet état une limite d'élasticité suffisante, à ce qu'il soit exempt de fragilité et à ce qu'il présente de bonnes caractéristiques à la fissuration sous contrainte par H2S.

On connaît des joints filetés ayant une lèvre mâle en correspondance avec un logement femelle (US 4611838, US 3870351, WO 99/08034, US 6047997). Il s'est avéré que ces montages connus ne tiennent pas l'étanchéité après expansion plastique, qui n'y est d'ailleurs nullement envisagée.

Un mode de réalisation d'un joint d'étanchéité métal contre métal en forme de doigt adapté à cette technique est décrit dans la demande internationale PCT/FR01/02005 précitée. Cependant avec ce mode de réalisation, il arrive pour les taux d'expansions les plus élevés que les contraintes mécaniques subies par les tubes lors du passage du boulet désengagent le doigt de son logement, entraînant une étanchéité insuffisante voire une absence d'étanchéité au niveau des joints.

La figure 1 représente un joint comprenant un élément fileté mâle 1 disposé en extrémité d'un premier tube 11. Cet élément mâle est vissé en butée dans un élément fileté femelle 2 disposé en extrémité d'un second tube 12. Le diamètre intérieur de l'élément fileté mâle est ici égal au diamètre intérieur DI des tubes 11, 12. Dans le mode de réalisation de la figure 1, le diamètre extérieur de l'élément fileté femelle est égal au diamètre extérieur DE des tubes 11, 12 à titre d'exemple uniquement.

Le joint est représenté sur la figure 1 à l'état simplement vissé en butée avant toute opération d'expansion diamétrale.

Le second tube 12 tel que représenté est un tube de grande longueur. Ce second tube pourrait être, de manière non représentée, un manchon muni d'un côté de l'élément femelle 2 et de l'autre côté d'un second élément femelle symétrique ou non de ce dernier et vissé à un élément mâle situé en extrémité d'un autre tube de grande longueur.

Seul l'élément mâle 1 est représenté sur la figure 2.

Il comprend un filetage mâle 3, conique à filets trapézoïdaux, et se prolonge vers son extrémité libre par une partie non filetée constituée par une gorge 21 et par une lèvre 5 et se termine par une surface annulaire d'extrémité mâle 9.

La gorge 21 possède une forme en U peu profonde.

Elle démarre immédiatement au-delà du filetage et sa profondeur h_{g} par rapport à la surface extérieure de la lèvre est inférieure à la hauteur des filets du filetage 3. De la sorte le fond de la gorge arrive au pied du premier filet du filetage et se raccorde à la lèvre par un flanc peu incliné.

La largeur totale de la gorge l_{g} à son sommet est sensiblement égale à 4 fois sa profondeur h_{g}.

La lèvre 5 présente:
a) une surface périphérique extérieure 7 de forme cylindrique,
b) une surface périphérique intérieure 19 qui correspond à la zone d'extrémité de la surface périphérique intérieure cylindrique du premier tube 11,

La lèvre 5 possède donc une épaisseur eₗ uniforme sensiblement égale à la moitié de l'épaisseur eₜ du tube 11. Elle possède une longueur lₗ mesurée depuis l'extrémité de la gorge jusqu'à l'aplomb de la surface 15 (définie plus bas) sensiblement égale à 3 fois l'épaisseur de lèvre eₗ.

La surface d'extrémité mâle 9 forme une feuillure. Cette feuillure est constituée d'une surface transversale annulaire mâle 15 et d'une languette 13 annulaire se projetant axialement, adjacente à la surface transversale 15. La surface transversale mâle 15 est située du côté de la feuillure dirigé vers l'intérieur du joint fileté.

La surface périphérique extérieure de la languette 13 est dans le prolongement de la surface 7 de la lèvre tandis que sa surface périphérique intérieure 17 est par exemple cylindrique.

L'épaisseur radiale de la languette 13 est sensiblement identique à celle de la surface transversale 15 tandis que la hauteur de la languette (ou projection axiale de celle-ci) est sensiblement égale à l'épaisseur radiale de cette même languette. Elle peut aussi être égale à 1,5 fois cette épaisseur radiale pour mieux maintenir l'extrémité libre de la languette lors de l'expansion.

L'élément femelle 2 est représenté seul à la figure 3.

Il comprend, en partant de l'extrémité libre de l'élément femelle, un filetage femelle 4 à filets trapézoïdaux homologue du filetage mâle 3 puis une partie non filetée 6. Cette partie non filetée 6 forme un logement pour correspondre et coopérer avec la lèvre 5 de l'élément mâle 1.

Le logement femelle 6 présente une surface périphérique 8 tournée vers l'intérieur, de forme cylindrique, reliée d'un côté au filetage femelle 4 et de l'autre côté via un épaulement femelle 10 à la surface périphérique intérieure cylindrique 20 du second tube 12.

De manière générale, le diamètre de la surface périphérique 8 du logement est très légèrement supérieur au diamètre de la surface périphérique extérieure 7 de la lèvre mâle 5. De cette façon, les surfaces 7 et 8 peuvent coulisser l'une dans l'autre à faible jeu lors du vissage de l'élément mâle dans l'élément femelle, par exemple avec un jeu de 0,2 mm. L'avantage d'un tel coulissement sera exposé plus loin.

L'épaulement femelle présente une surface annulaire d'épaulement 10 qui est disposée de manière sensiblement correspondante et possède une forme sensiblement homologue à celle d'extrémité mâle 9. La surface 10 forme une feuillure constituée d'une surface annulaire transversale femelle 16 et d'une rainure annulaire 14 adjacente à la surface transversale 16.

La surface transversale femelle 16 est située du côté de la feuillure dirigé vers l'intérieur du joint fileté.
La paroi 18 de la rainure 14 adjacente à la surface transversale 16 est par exemple cylindrique et peut se raccorder à cette dernière par un chanfrein ou un arrondi. La paroi opposée de la rainure est dans le prolongement de la surface périphérique 8. Lors du vissage du joint fileté, la surface 17 de la languette "monte" sur la paroi 18 de la rainure jusqu'à ce que l'extrémité libre transversale de la languette arrive contre le fond de la rainure 14. La hauteur axiale hᵣ de la languette 14 et la profondeur axiale Pᵣ de la rainure sont telles que les surfaces transversales 15 et 16 ne viennent en contact qu'après un vissage supplémentaire. Le faible jeu entre les surfaces cylindriques 7 et 8 et entre les surfaces de la languette et de la rainure qui les prolongent permet l'évacuation de la graisse en fin de vissage et donc un positionnement correct de la lèvre 5 par rapport au logement 6.

Les figures 4 à 7 explicitent les phénomènes de déformation qui se produisent lorsque l'on réalise au moyen d'un boulet une expansion diamétrale de l'ordre de 15 % sur des tubes assemblés par les joints filetés qui viennent d'être décrits et qui permettent d'obtenir en final un joint expansé étanche.

Une telle déformation effectuée sur des matériaux métalliques conduit à des déformations plastiques du métal.

On passe ainsi par exemple d'un diamètre extérieur de 139,7 mm (5,5 in) sur le deuxième tube 12 en amont de l'expansion et par conséquent dans la partie non encore déformée à un diamètre extérieur de 157,5 mm (6,2 in) sur le premier tube 11 expansé (à l'aplomb ou en aval du cône de sortie 33 du boulet). Il faut de ce fait utiliser pour les tubes un métal qui accepte de telles déformations plastiques.

Les déformations plastiques générées augmentent la limite d'élasticité des produits: un tube possédant initialement une limite d'élasticité de 310 MPa (45 KSI) voit ainsi celle-ci augmenter à 380 MPa (55 KSI) après déformation.

L'expansion diamétrale est réalisée de manière connue à l'aide d'un boulet 30 (figure 4) de diamètre maximal adéquat. On force le passage de ce boulet dans les tubes soit en le tirant à l'aide de tiges de forage soit en le poussant par exemple par une pression hydraulique.

Le boulet a par exemple une forme biconique avec un cône d'entrée 31 sur lequel se fait l'expansion, une partie cylindrique médiane 32 et une partie conique de sortie 33. Toutes les surfaces des parties de boulet sont raccordées entre elles par des rayons de raccordement adaptés.

WO 93/25800 divulgue notamment des angles de cônes d'entrée particulièrement adaptés à l'expansion diamétrale de tubes dits EST pour l'exploitation de puits d'hydrocarbures.

Les tubes 11, 12 ayant une section sensiblement constante, leurs extrémités ne posent pas de problème particulier lors du passage du boulet pourvu que la capacité de déformation du métal dont ils sont faits soit suffisante.

Les problèmes à résoudre viennent du fait que les éléments filetés en extrémité des tubes ont des épaisseurs plus faibles que celles des corps des tubes et localement variables, sont plus ou moins maintenus et tendent à se déformer de manière différente entre les parties mâles et les parties femelles correspondantes.

Ces déformations différentes, si elles sont maîtrisées en utilisant le joint fileté selon l'invention, permettent de réaliser un joint fileté étanche après expansion diamétrale ne présentant pas de relief local rédhibitoire à l'intérieur de la surface périphérique intérieure des tubes.

Le processus d'expansion du joint fileté peut être décomposé en 4 phases qui font l'objet des figures 4 à 7.

Bien que l'opération d'expansion puisse tout à fait être effectuée dans le sens contraire et conduire à des résultats adéquats, on a représenté le mode préféré de déformation dans lequel le boulet se déplace de l'élément mâle 1 du premier tube 11 vers l'élément femelle 2 du second tube 12.

### a) Phase d'expansion sur le cône du boulet

La figure 4 montre le joint fileté au cours de cette phase.

L'expansion est réalisée par le cône d'entrée 31 du boulet 30 et la figure 4 montre les filetages mâles 3 et femelles 4 en cours d'expansion diamétrale.

Sur la figure 4, le cône d'entrée 31 du boulet 30 amorce la déformation de la lèvre mâle et de la zone de logement homologue femelle en les pliant pour les incliner par rapport à l'axe de l'assemblage.

Au cours de cette phase d'expansion, les efforts de réaction au passage du boulet 30 sont progressivement transférés du premier tube 11 vers le deuxième tube 12.

Du fait de ces efforts de réaction, la lèvre mâle 5 est comprimée axialement au cours de cette phase d'expansion par la surface annulaire d'épaulement femelle 10.

La fin de la phase d'expansion correspond à l'arrivée de l'extrémité libre de l'élément mâle à la fin du cône d'entrée 31 du boulet.

### b) Phase de flexion

Au cours de cette phase, la lèvre mâle est située au niveau de la partie centrale 32 du boulet: voir figure 5.

### i) lèvre mâle

La lèvre mâle 5 est soumise à chacune de ses deux extrémités à des moments de flexion de sens opposés.

La surface d'extrémité mâle 9 est en effet maintenue en position dans la surface d'épaulement femelle 10 du fait des feuillures avec appuis 15, 16 et du système d'emprisonnement languette 13/rainure 14.

L'emprisonnement des feuillures oblige la zone d'extrémité libre de la lèvre mâle 5 à suivre l'inclinaison de la zone 22 de pleine épaisseur de l'élément femelle au-delà de l'épaulement. Cette zone 22 est encore en cours d'expansion sur le cône d'entrée 31 du boulet et crée donc un moment de flexion à ce niveau.

L'autre extrémité de la lèvre, du côté filetage mâle 3, n'est plus supportée et impose au contraire à la lèvre un moment de flexion opposé à celui en extrémité libre de lèvre.

Les moments de flexion de signe opposé aux 2 extrémités de la lèvre mâle entraînent la courbure en banane de la lèvre mâle 5 comme sur la figure 5, la surface périphérique extérieure 7 de la lèvre 5 prenant une forme bombée convexe.

L'état de compression axiale de la lèvre mâle 5 en fin de phase d'expansion facilite sa courbure sous l'effet des moments de flexion.

La gorge 21 située entre la lèvre mâle 5 et le filetage mâle 3 joue le rôle d'une rotule plastique qui accentue la courbure de la lèvre mâle en limitant la largeur sur laquelle cette courbure peut s'effectuer.

Il faut toutefois veiller dans ce cas à ce que les contraintes de compression axiale au niveau de la lèvre mâle n'induisent pas le flambement du métal 23 sous la gorge. Ce flambement se traduirait par une saillie du métal sous la gorge par rapport à la surface périphérique intérieure 19.

### ii) logement femelle

Le même phénomène de flexion se produit sur le logement femelle.

La zone 22 de pleine épaisseur relativement rigide par rapport aux zones de lèvre relativement minces subit à son passage au niveau de la partie médiane une expansion additionnelle de sorte que le diamètre intérieur de la zone 22 devient supérieur à celui de la zone médiane 32 du boulet. Le phénomène d'expansion additionnelle est décrit dans le document WO 93/25800.

### c) Phase de redressement

Cette phase illustrée par la figure 6 correspond au passage de la zone 22 de pleine épaisseur femelle sur la partie médiane 32 du boulet 30.

### i) logement femelle

La flexion générée dans la phase précédente tend à être ramenée à zéro sous l'effet de la tension et des contraintes circonférentielles, ce qui génère un état de contraintes axiales de flexion inverse par rapport à la courbure, produisant ainsi le redressement.

Le moment de flexion engendré par ces contraintes est proportionnel à l'épaisseur de matière en amont du redressement. Au moment d'arriver sur le tube 12 en pleine épaisseur (zone 22), le moment de flexion n'est pas suffisant pour redresser la zone périphérique intérieure du logement femelle qui tend à plonger alors vers l'axe du produit. Ce comportement se manifeste par une diminution locale de diamètre extérieur du tube 12.

### ii) lèvre mâle

Au fur et à mesure du redressement de la partie femelle, la différence d'encombrement axial qui était générée par la flexion diminue. La lèvre mâle 5 perd donc progressivement son état de compression. Cela se poursuit avec la séparation des surfaces 15, 16 initialement en butée. Ce phénomène est renforcé par "le plongeon" de la surface périphérique intérieure 8 du logement femelle qui produit un effet d'ouverture des butées 15, 16.

La déformation en banane imposée dans la phase précédente est conservée.

### d) État final

La figure 7 montre l'état final du joint fileté après le passage du boulet.

L'état de contraintes circonférentielles généré par l'expansion conduit à un frettage de la surface périphérique extérieure 7 de la lèvre mâle par celle intérieure 8 du logement femelle. On peut alors parler d'auto-frettage des surfaces 7, 8 du joint fileté à l'état expansé, ce qui permet d'assurer l'étanchéité. La lèvre mâle 5 ne plonge pas vers l'axe, car le déport radial imposé par l'emprisonnement des feuillures 9, 10 a généré suffisamment de déformations plastiques.

Le retour élastique des éléments du joint fileté après passage du boulet est négligeable devant les déformations plastiques mises en jeu.

Le frettage radial induit une pression de contact de plusieurs dizaines de MPa voire de plus de 100 MPa, suffisante pour assurer une étanchéité aux pressions intérieures ou extérieures au joint fileté. La longueur de frettage est suffisant sur toute la périphérie des surfaces de contact pour assurer une étanchéité stable entre celles-ci.

Une étanchéité est par ailleurs nécessaire lorsque l'expansion est réalisée en poussant hydrauliquement le boulet 30 sous une pression de 10 à 30 MPa, toute fuite au niveau des joints déjà expansés empêchant la pénétration du boulet plus avant dans la colonne et bloquant par conséquent le processus d'expansion.

On notera qu'à l'état final, il peut très bien advenir que la languette 13 ne repose plus dans la rainure 14 .

Une surface d'extrémité mâle 9 non emprisonnée dans celle d'épaulement femelle 10 entraîne une plongée de cette extrémité lors de la phase de redressement qui voit la séparation des surfaces transversales 15 et 16 initialement en butée et il s'ensuit une saillie inacceptable de l'extrémité inférieure de la lèvre mâle à l'intérieur de la colonne. La colonne ne permet alors plus de descendre des appareillages ou des outils d'un encombrement donné.

Un jeu trop important entre surface périphérique 7 de la lèvre mâle 5 et surface périphérique 8 du logement femelle sur le joint fileté avant expansion ne permettrait pas le frettage de ces surfaces en fin d'opération d'expansion.

Une interférence radiale entre ces surfaces à l'état initial avant expansion est susceptible de gêner les déformations différentielles (courbure, redressement) entre ces surfaces lors des opérations d'expansion, déformations différentielles permettant de réaliser le frettage de ces surfaces en fin d'opération d'expansion. Elle risque aussi d'entraîner un grippage de ces surfaces lors du vissage et un mauvais positionnement des éléments avec un emprisonnement incorrect des surfaces 9 et 10 et par là un frettage médiocre des surfaces 7 et 8 après expansion.

Dans un mode de réalisation préféré, la forme en feuillure annulaire avec surfaces transversales 15, 16 et système languette 13/rainure 14 permet d'empêcher la plongée de l'extrémité libre mâle lors de l'expansion. D'autres modes de réalisation des surfaces encastrées 9, 10 sont possibles afin de donner le même résultat.

Une lèvre mâle 5 trop mince, d'épaisseur eₗ inférieure au tiers de l'épaisseur et des tubes 11, 12 ne permet pas de réaliser une butée efficace au niveau des surfaces transversales 15, 16.

Si l'épaisseur eₗ de la lèvre mâle 5 est au contraire supérieure aux 2/3 de l'épaisseur et des tubes 11,12, l'épaisseur du tube 12 au niveau de la zone de logement femelle entraîne une section critique de filetage femelle 4 trop faible et par conséquent une résistance insuffisante à la traction des filetages.

Le rapport longueur/épaisseur de lèvre mâle 5 régit le comportement en compression et en flexion de la lèvre 5.

Une lèvre mâle 5 de longueur lₗ inférieure à son épaisseur le ne permet pas la flexion suffisante de la surface périphérique 7 de la lèvre mâle 5 et/ou le redressement de la surface périphérique 8 du logement femelle.

Une lèvre mâle 5 de longueur lₗ supérieure à 4 fois son épaisseur eₗ peut entraîner un flambement de la lèvre mâle et une saillie intérieure de celle-ci du côté filetage.

Cet effet est accentué par la présence d'une gorge 21 entre filetage mâle 3 et lèvre mâle 5.

C'est pourquoi la gorge a préférentiellement une profondeur limitée à une hauteur de filet et une longueur limitée par rapport à sa profondeur.

Une languette 13 d'épaisseur radiale insuffisante et de hauteur axiale inférieure à l'épaisseur radiale ne pourrait être maintenue suffisamment lors de l'expansion.

L'invention prévoit de munir l'une au moins des surfaces 7 et 8 d'un revêtement destiné à augmenter l'aire effective de contact de ces surfaces lors de l'expansion radiale du joint et par conséquent à stabiliser l'étanchéité obtenue. On a par exemple obtenu en déposant, sur une surface usinée d'une pièce en acier au carbone présentant une rugosité Ra, telle que définie par la norme ISO 4287/I, au plus égale à 3,2 µm, une couche de cuivre, de zinc, d'étain ou de plomb d'une épaisseur supérieure à 17 µm, une réduction des irrégularités de surface. Surtout, la ductilité des matériaux utilisés pour le revêtement d'un élément tubulaire favorise l'enchâssement dans ce revêtement des aspérités de la surface d'étanchéité correspondante de l'autre élément tubulaire, augmentant ainsi les surfaces effectives de contact et améliorant par conséquent l'étanchéité.

Bien entendu, le revêtement doit être adhérent, c'est-à-dire ne pas se détacher du substrat par frottement. Le matériau doit être choisi en fonction de celui du substrat de manière à ne pas entraîner une corrosion par couplage galvanique. Le cuivre peut être utilisé sur des aciers à teneur en chrome au moins égale à 10 % et sur des alliages de nickel, le zinc sur des aciers non alliés ou peu alliés. L'étain peut être employé également. Le plomb ne peut être utilisé que dans des cas où sa toxicité est sans conséquence.

Le dépôt peut être effectué par tout procédé propre à fournir un revêtement adhérent et uniforme, par exemple par dépôt électrolytique en immersion, dépôt électrolytique au tampon ou dépôt chimique.

Le revêtement peut comporter plusieurs couches, le cas échéant de matériaux différents, la couche extérieure étant alors la plus ductile. La couche au contact du substrat peut être une couche très mince d'adhésion.

Le revêtement peut être présent sur les deux éléments tubulaires, ou sur un seul d'entre eux, notamment l'élément mâle.

Comme connu en soi, pour éviter une dissymétrie dans la réalisation des filetages et par conséquent une diminution de la résistance mécanique des joints, due au fait que les diamètres respectivement extérieur et intérieur des tubes ne sont pas concentriques lorsqu'ils sortent de fabrication avant filetage, on peut réaliser avant l'opération de filetage une expansion du diamètre extérieur partant de l'extrémité libre de l'élément femelle et s'étendant sur tout ou partie de la longueur du filetage à réaliser.

De manière similaire, il est possible de réduire le diamètre intérieur au voisinage l'extrémité de l'élément mâle par un rétreint réalisé avant usinage.

L'expansion et le rétreint peuvent être réalisés avec un diamètre constant, ou avec un diamètre croissant pour l'élément femelle, décroissant pour l'élément mâle, en direction de l'extrémité.

### Exemple de réalisation

- Tubes de diamètre extérieur DE 139,7 mm et d'épaisseur nominale et 7,72 mm (5,5 in × 17,00 lb/ft) en acier au carbone traité pour une limite d'élasticité minimale de 290 MPa (42 KSI):
   La composition chimique de l'acier et son traitement thermique sont adaptés pour obtenir des caractéristiques de ductilité les plus élevées possibles et plus particulièrement des caractéristiques élevées d'allongement réparti avant striction AR lors de l'essai de traction (AR supérieur ou égal à 15 % par exemple).
   On choisit par exemple un acier à teneur en carbone suffisamment basse, voisine de 0,14 % (en poids), à teneur en manganèse relativement élevée, de l'ordre de 1 % et comportant une addition d'aluminium apte à fixer l'azote résiduel de l'acier.
   Une teneur en Al de 0,035 % pour une teneur en azote de 0,010 % est tout à fait convenable dans la mesure où l'acier est traité thermiquement par recuit ou par trempe suivie de revenu pour que l'addition d'Al soit effectivement à même de fixer l'azote. D'autres éléments chimiques connus pour fixer l'azote peuvent également être utilisés conjointement ou à la place de l'aluminium.
   Une telle composition chimique qui vise à éliminer les teneurs en atomes interstitiels libres tels que ceux d'azote rend en outre l'acier insensible au phénomène néfaste de vieillissement après écrouissage qui détériore aussi les caractéristiques de ductilité.
   L'acier peut être à l'état recuit (recuit de normalisation ou recuit de détente après travail à froid par exemple) ou dans un état structurellement équivalent.
   Un acier allié ou martensitique à forte teneur en chrome peut être à l'état trempé et revenu ou normalisé et revenu. Un acier inoxydable austénitique ou duplex ou un alliage de nickel peut être à l'état hypertrempé.
- Joints filetés intégraux selon l'invention:
   · filetages 3,4 coniques (conicité = 12,5 % sur le diamètre) à filets trapézoïdaux de hauteur radiale 1 mm et de pas axial 4 mm
   · lèvre mâle 5 de forme cylindrique
   · épaisseur eₗ de lèvre mâle 3,2 mm (41 % de l'épaisseur du tube)
   · longueur lₗ de lèvre mâle = 11,5 mm
   · gorge 21 de profondeur h_{g} 1 mm et de longueur l_{g} 4 mm entre extrémité de filetage mâle 3 et lèvre mâle 5
   · surface d'extrémité mâle 9 avec une languette 13 de hauteur axiale 1,8 mm et d'épaisseur radiale 1,8 mm
   · surface 7 de la lèvre mâle recouverte d'une couche adhérente de zinc d'une épaisseur de 50 µm, obtenue par dépôt électrolytique au tampon.
   · résistance à la traction du joint fileté ≥ 50 % de la résistance à la traction de chacun des corps de tubes 11, 12.
- Résultats après expansion de la colonne de tubes:
   · diamètre extérieur des tubes 11, 12 = 157,5 mm (6,2 in) · épaisseur des tubes: 7,2 mm
   · limite d'élasticité des tubes ≥ 415 MPa (60 KSI)
   · dureté ≤ 22 HRc (valeur maximale spécifications NACE MR 01 75)
   · passages satisfaisant aux tests suivants réalisés à l'état expansé et à l'état expansé + vieilli
      * essai d'éclatement sous pression intérieure
      * essai d'effondrement sous pression extérieure ("collapse")
      * essai de tenue aux chocs Charpy V
      * essai SSC de résistance à la fissuration par H₂S (SSC: "Sulfide stress cracking") selon spécification NACE TM 01-77
Nota: NACE = National association of Corrosion Engineers (USA).

Bien que l'invention ait été décrite en détail en relation avec un joint fileté pour puits de forage destiné à subir une expansion radiale, l'invention n'est pas limitée à une telle application et peut être mise en oeuvre à chaque fois que des surfaces doivent être en contact mutuel étanche après un déplacement relatif, provoqué notamment par une expansion.

Par ailleurs, le revêtement selon l'invention peut être appliqué avec avantage sur les surfaces d'étanchéité des joints décrits dans les demandes de brevets suivantes, déposées au nom de la demanderesse le même jour que la présente demande:
- "Joint fileté tubulaire étanche améliorée après expansion diamétrale", relative à un joint dont les deux éléments tubulaires comportent des surfaces de contact étanche mutuel interposées chacune entre deux sections filetées;
- "Joint fileté tubulaire à étanchéité améliorée après expansion plastique", relative à un joint dont les deux éléments tubulaires présentent des épaulements inclinés respectifs situés en regard l'un de l'autre et propres à venir en contact mutuel étanche notamment après une expansion radiale du joint.

## Revendications

1. Joint tubulaire comprenant un premier élément tubulaire (1) et un second élément tubulaire (2) propres à être mutuellement assemblés avec insertion d'une première région du premier élément tubulaire dans une seconde région du second élément tubulaire, lesdites première et seconde régions comportant des surfaces d'étanchéité respectives (7, 8) propres à venir en contact mutuel étanche dans un état final du joint à l'issue d'une expansion radiale de celui-ci, **caractérisé en ce que** l'une au moins desdites surfaces d'étanchéité est munie d'un revêtement adhérent comportant un matériau plus ductile que le matériau du substrat et d'une épaisseur supérieure à 17 µm, propre à augmenter l'aire effective de contact desdites surfaces d'étanchéité.

2. Joint tubulaire selon la revendication 1, dans lequel l'épaisseur du revêtement est d'au moins 20 µm.

3. Joint tubulaire selon la revendication 2, dans lequel l'épaisseur du revêtement est comprise entre 35 et 50 µm.

4. Joint tubulaire selon l'une des revendications précédentes, dans lequel, pour un substrat en acier ou en alliage de nickel, ledit matériau plus ductile est choisi parmi le cuivre, le plomb, le zinc, l'étain et leurs alliages.

5. Joint tubulaire selon l'une des revendications précédentes, dans lequel les premier et second éléments tubulaires sont propres à être mutuellement assemblés par vissage d'un filetage mâle (3) du premier élément tubulaire dans un filetage femelle (4) du second élément tubulaire.

6. Joint tubulaire selon la revendication 5, dans lequel lesdits filetages sont coniques de conicité au plus égale à 12,5 %.

7. Joint tubulaire selon la revendication 5, dans lequel lesdits filetages sont cylindriques à au moins deux étages de diamètres différents.

8. Joint tubulaire selon la revendication 7, dans lequel chacune desdites surfaces d'étanchéité est située entre deux étages de filetage.

9. Joint tubulaire selon l'une des revendications 5 à 8, dans lequel ladite première région comporte une partie annulaire (5) ayant une face de butée saillante (9) et ladite seconde région comporte un logement (6), homologue de ladite partie annulaire, ayant une face de butée rentrante (14), les deux faces de butée permettant, au montage, de contrôler le couple de vissage des premier et second filetages (3,4) l'un sur l'autre et d'insérer la première région dans la seconde région.

10. Joint tubulaire selon la revendication 9, dans lequel la surface périphérique extérieure (7) de ladite partie annulaire (5) est disposée à faible jeu de la surface périphérique intérieure (8) du logement (6).

11. Joint tubulaire selon l'une des revendications 9 et 10, dans lequel lesdites surfaces d'étanchéité appartiennent respectivement à la surface périphérique extérieure (7) de ladite partie annulaire (5) et à la surface périphérique intérieure (8) du logement (6).

12. Joint tubulaire selon l'une des revendications 9 à 11, dans lequel ladite première région est située à l'extrémité libre du premier élément tubulaire, ladite partie annulaire formant une lèvre.

13. Joint tubulaire selon l'une des revendications 9 à 12, dans lequel la face de butée saillante comporte une languette annulaire (13) se projetant axialement et une surface transversale (15) reliant la languette annulaire à la surface radialement intérieure du premier élément tubulaire et la face de butée rentrante comporte une rainure annulaire (14) et une surface transversale (16) reliant la rainure annulaire à la surface radialement intérieure du second élément tubulaire, la languette (13) s'engageant dans la rainure (14) et la surface transversale de la face de butée saillante venant en regard de la surface transversale de la face de butée rentrante.

14. Joint tubulaire selon la revendication 13, dans lequel la surface périphérique extérieure de la languette annulaire (13) est dans le prolongement de la surface périphérique extérieure de ladite partie annulaire la surface périphérique intérieure de la rainure annulaire (14) est dans le prolongement de la surface périphérique intérieure du logement.

15. Joint tubulaire selon l'une des revendications 13 et 14, dans lequel l'épaisseur radiale (e_{d}) de la languette (13) est sensiblement égale à celle de la surface transversale (15) de la face de butée rentrante (9).

16. Joint tubulaire selon l'une des revendications 13 à 15, dans lequel le rapport entre la hauteur mesurée axialement (h_{d}) de la languette (13) et son épaisseur radiale (e_{d}) est compris entre 0,8 et 1,6.

17. Joint tubulaire selon l'une des revendications 13 à 16, dans lequel la hauteur mesurée axialement (h_{d}) de la languette (13) est comprise entre 0,8 et 3 mm.

18. Joint tubulaire selon l'une des revendications 13 à 17, dans lequel la hauteur axiale (hᵣ) de la languette (13) et la profondeur axiale (Pᵣ) de la rainure (14) sont telles que, lors du vissage du joint fileté, le premier contact en butée a lieu entre l'extrémité libre transversale de la languette et le fond de la rainure.

19. Joint tubulaire selon l'une des revendications 9 à 18, dans lequel l'élément mâle (1) présente une gorge (21) en extrémité du filetage mâle (3) entre filetage et lèvre mâle (5).

20. Joint tubulaire selon la revendication 19, dans lequel la gorge (21) a une profondeur (h_{g}) au plus égale à la hauteur des filets mâles (3).

21. Joint tubulaire selon l'une des revendications 19 et 20, dans lequel la gorge (21) a une largeur axiale totale (l_{g}) et une profondeur (h_{g}) telles que sa largeur axiale est comprise entre 2 et 15 fois sa profondeur.

22. Joint fileté tubulaire étanche **caractérisé en ce qu'**il résulte d'un joint fileté tubulaire selon l'une quelconque des revendications précédentes après une expansion diamétrale dans le domaine des déformations plastiques, les surfaces d'étanchéité frettant l'une sur l'autre sur toute leur périphérie.

23. Joint fileté tubulaire expansé selon la revendication 22, dans lequel l'expansion diamétrale subie par le joint fileté tubulaire est au moins égale à 10 %.

24. Procédé de réalisation d'un joint fileté tubulaire étanche **caractérisé en ce que** l'on part d'un joint fileté tubulaire selon l'une quelconque des revendications 1 à 21 dit "joint fileté tubulaire initial" et **en ce qu'**on fait subir à ce joint fileté initial une expansion diamétrale dans le domaine des déformations plastiques à l'aide d'un boulet d'expansion (30) de diamètre supérieur au diamètre intérieur (DI) des éléments tubulaires du joint fileté qui est déplacé axialement dans le joint fileté, la lèvre mâle (5) et le logement femelle (6) étant dimensionnés de manière à subir d'abord ensemble lors du passage du boulet une déformation plastique de flexion alors que seul le logement femelle subit ensuite une déformation plastique en sens inverse de redressement, ce qui vient fretter finalement une surface d'étanchéité de la partie annulaire de la lèvre mâle par une surface d'étanchéité du logement femelle..

25. Procédé selon la revendication 24, dans lequel la flexion de la lèvre mâle (5) est délimitée par la présence d'une gorge (21) à l'extrémité de la lèvre mâle du côté du filetage mâle.

26. Procédé selon l'une des revendications 24 et 25, dans lequel le joint fileté tubulaire mis en oeuvre est du type intégral et le boulet d'expansion (30) est déplacé de l'élément fileté mâle (1) vers l'élément fileté femelle (2).

## Patentansprüche

1. Rohrförmige Verbindung mit einem ersten rohrförmigen Element (1) und einem zweiten rohrförmigen Element (2), die in der Lage sind, miteinander zusammengesetzt zu werden durch Eindringen eines ersten Bereichs des ersten rohrförmigen Elements in einen zweiten Bereich des zweiten rohrförmigen Elements, wobei der erste und zweite Bereich entsprechende Dichtungsoberflächen (7, 8) aufweisen, die in der Lage sind in gegenseitigen dichten Kontakt in einem Endzustand der Verbindung zu kommen, nach einer radialen Expansion von diesem, **dadurch gekennzeichnet, dass** wenigstens eine der Dichtungsoberflächen mit einem haftenden Überzug versehen ist, der ein duktileres Material aufweist, als das Material des Substrats und eine Dicke aufweist, die größer ist als 17 µm, wodurch der effektive Kontaktbereich der Dichtungsoberflächen erhöht wird.

2. Rohrförmige Verbindung nach Anspruch 1, bei der die Dicke des Überzugs wenigstens 20 µm beträgt.

3. Rohrförmige Verbindung nach Anspruch 2, bei der die Dicke des Überzugs zwischen 35 und 50 µm beträgt.

4. Rohrförmige Verbindung nach einem der vorhergehenden Ansprüche, bei der, für ein Substrat aus Stahl oder aus einer Nickellegierung, das duktilere Material ausgewählt wird aus dem Kupfer, dem Blei, dem Zink, dem Zinn und deren Legierungen.

5. Rohrförmige Verbindung nach einem der vorhergehenden Ansprüche, bei der das erste und das zweite rohrförmige Element in der Lage sind, durch Schrauben eines Außengewindes (3) des ersten rohrförmigen Elements in ein Innengewinde (4) des zweiten rohrförmigen Elements miteinander zusammengesetzt zu werden.

6. Rohrförmige Verbindung nach Anspruch 5, bei der die Gewinde konisch sind, mit einer Konizität die höchstens 12,5% beträgt.

7. Rohrförmige Verbindung nach Anspruch 5, bei der die Gewinde zylindrisch sind, mit wenigstens zwei Stufen unterschiedlicher Durchmesser.

8. Rohrförmige Verbindung nach Anspruch 7, bei der jede der Dichtungsoberflächen zwischen zwei Gewindestufen angeordnet ist.

9. Rohrförmige Verbindung nach einem der Ansprüche 5 bis 8, bei der der erste Bereich einen ringförmigen Abschnitt (5), der eine vorspringende Anschlagseite (9) aufweist, und der zweite Bereich eine Aufnahme (6) aufweist, die entsprechend zum ringförmigen Abschnitt ausgebildet ist, wobei sie eine einspringe Anschlagseite (14) aufweist, wobei die beiden Anschlagseiten bei der Montage ermöglichen, das Schraubenmoment des ersten und zweiten Gewindes (3, 4), das eine auf das andere, zu kontrollieren und den ersten Bereich in den zweiten Bereich einzubringen.

10. Rohrförmige Verbindung nach Anspruch 9, bei der die äußere Umfangsfläche (7) des ringförmigen Abschnitts (5) mit geringem Spiel zur Innenumfangsfläche (8) der Aufnahme (6) angeordnet ist.

11. Rohrförmige Verbindung nach Anspruch 9 oder 10, bei der die Dichtungsoberflächen zu der äußeren Umfangsfläche (7) des ringförmigen Abschnitts (5) bzw. zur Innenumfangsfläche (8) der Aufnahme (6) gehören.

12. Rohrförmige Verbindung nach einem der Ansprüche 9 bis 11, bei der der erste Bereich am freien Ende des ersten rohrförmigen Elements angeordnet ist, wobei der ringförmige Abschnitt eine Lippe bildet.

13. Rohrförmige Verbindung nach einem der Ansprüche 9 bis 12, bei der die vorspringende Anschlagseite eine ringförmige Lasche (13) aufweist, die axial vorspringt, und eine Queroberfläche (15), die die ringförmige Lasche mit der radialen Innenoberfläche des ersten rohrförmigen Elements und der einspringenden Anschlagseite verbindet, eine ringförmige Kerbe (14) und eine Queroberfläche (16) aufweist, die die ringförmige Kerbe mit der radialen Innenoberfläche des zweiten rohrförmigen Elements verbindet, wobei die Lasche (13) in die Kerbe (14) eingreift und die Queroberfläche der vorspringenden Anschlagseite gegenüberliegend zu Queroberfläche der einspringenden Anschlagseite kommt.

14. Rohrförmige Verbindung nach Anspruch 13, bei der die äußere Umfangsoberfläche der ringförmigen Lasche (13) sich in der Verlängerung der äußeren Umfangsfläche des ringförmigen Abschnitts erstreckt, und die innere Umfangsoberfläche der ringförmigen Kerbe (14) sich in der Verlängerung der inneren Umfangsoberfläche der Aufnahme erstreckt.

15. Rohrförmige Verbindung nach Anspruch 13 oder 14, bei der die radiale Dicke (e_{d}) der Lasche (13) im Wesentlichen gleich jener der Queroberfläche (15) der einspringenden Anschlagoberfläche (9) ist.

16. Rohrförmige Verbindung nach einem der Ansprüche 13 bis 15, bei der das Verhältnis zwischen der Höhe, die axial gemessen wird (h_{d}) der Lasche (13) und ihrer radialen Dicke (e_{d}) zwischen 0,8 und 1,6 liegt.

17. Rohrförmige Verbindung nach einem der Ansprüche 13 bis 16, bei der die axial gemessene Höhe (h_{d}) der Lasche (13) zwischen 0,8 und 3 mm beträgt.

18. Rohrförmige Verbindung nach einem der Ansprüche 13 bis 17, bei der die axiale Höhe (hᵣ) der Lasche (13) und die axiale Tiefe (Pᵣ) der Kerbe (14), derart sind, dass beim Schrauben der Gewindeverbindung der erste Anschlagkontakt zwischen dem freien Querende der Lasche und dem Boden der Kerbe erfolgt.

19. Rohrförmige Verbindung nach einem der Ansprüche 9 bis 18, bei der das Einsteckelement (1) eine Nut (21) am vorderen Ende des Außengewindes (3) zwischen dem Gewinde und der vorspringenden Lippe (5) aufweist.

20. Rohrförmige Verbindung nach Anspruch 19, bei der die Nut (21) eine Tiefe (h_{g}) aufweist, die höchstens gleich der Höhe der Außengewinde (3) ist.

21. Rohrförmige Verbindung nach Anspruch 19 oder 20, bei der die Nut (21) eine gesamte axiale Breite (l_{g}) und eine Tiefe (h_{g}) derart aufweist, dass ihre axiale Breite zwischen 2- und 15-mal ihrer Tiefe beträgt.

22. Rohrförmige dichte Schraubverbindung, **dadurch gekennzeichnet, dass** sie aus einer rohrförmigen Gewindeverbindung nach einem der vorhergehenden Ansprüche besteht, nach einer Durchmesserexpansion im Bereich der plastischen Verformungen, wobei die Dichtungsoberflächen über ihren gesamten Umfang aufeinander geschrumpft sind.

23. Expandierte rohrförmige Schraubenverbindung nach Anspruch 22, bei der die Durchmesserexpansion, die von der rohrförmigen Schraubverbindung erfahren wird wenigstens 10% beträgt.

24. Verfahren zur Herstellung einer dichten rohrförmigen Schraubverbindung, **dadurch gekennzeichnet, dass** von einer rohrförmigen Schraubverbindung nach einem der Ansprüche 1 bis 21, genannt "rohrförmige Ausgangs-Schraubverbindung" ausgegangen wird, und dass diese Ausgangs-Schraubverbindung einer Durchmesserexpansion im Bereich der plastischen Verformungen mithilfe einer Expansionskugel (30) von einem Durchmesser, größer als der Innendurchmesser (DI) der rohrförmigen Elemente der Schraubverbindung unterworfenen wird, die axial in der Schraubverbindung bewegt wird, wobei die vorspringende Lippe (5) und die Innenaufnahme (6) derart dimensioniert sind, dass sie zunächst zusammen beim Vorbeibewegen der Kugel eine plastische Biegeverformung erfahren, während anschließend nur die Innenaufnahme eine plastische Verformung erfährt, in umgekehrter Richtung der Gleichrichtung, was schließlich zu einem Aufschrumpfen einer Dichtungsoberfläche auf den ringförmigen Abschnitt der vorspringenden Lippe durch eine Dichtungsoberfläche der Innenaufnahme führt.

25. Verfahren nach Anspruch 24, bei dem die Biegung der vorspringenden Lippe (5) durch das Vorhandensein einer Nut (21) am Ende der vorspringenden Lippe auf der Seite des Außengewindes begrenzt wird.

26. Verfahren nach Anspruch 24 oder 25, bei dem die verwirklichte rohrförmige Schraubverbindung vom integralen Typ ist und die Expansionskugel (30) vom Einsteck-Gewindeelement (1) zum Innengewindeelement (2) verschoben wird.

## Claims

1. Tubular connection comprising a first tubular element (1) and a second tubular element (2) capable of being assembled together with insertion of a first region of the first tubular element in a second region of the second tubular element, the first and second regions comprising respective sealing surfaces (7, 8) capable of coming into mutual sealing contact in a final state of the connection following radial expansion thereof, **characterised in that** at least one of the sealing surfaces is equipped with an adherent coating comprising a material which is more ductile than the substrate material and having a thickness of more than 17 µm and which is capable of increasing the effective area of contact of the sealing surfaces.

2. Tubular connection according to claim 11, wherein the thickness of the coating is at least 20 µm.

3. Tubular connection according to claim 2, wherein the thickness of the coating is between 35 and 50 µm.

4. Tubular connection according to one of the preceding claims, wherein for a substrate of steel or a nickel alloy, the more ductile material is selected from copper, lead, zinc, tin and their alloys.

5. Tubular connection according to one of the preceding claims, wherein the first and second tubular elements are capable of being assembled together by the screwing of a male thread (3) of the first tubular element into a female thread (4) of the second tubular element.

6. Tubular connection according to claim 5, wherein the threads are tapered having a taper at least equal to 12.5 %.

7. Tubular connection according to claim 5, wherein the threads are cylindrical with at least two stages of different diameters.

8. Tubular connection according to claim 7, wherein each of the sealing surfaces is located between two stages of thread.

9. Tubular connection according to one of claims 5 to 8, wherein the first region comprises an annular portion (5) having a projecting abutment face (9) and the second region comprises a housing (6), corresponding to the annular portion, having a recessed abutment face (14), the two abutment faces permitting, during assembly, control of the screwing torque of the first and second threads (3, 4) one over the other and the insertion of the first region in the second region.

10. Tubular connection according to claim 9, wherein the external peripheral surface (7) of the annular portion (5) is disposed with slight clearance from the internal peripheral surface (8) of the housing (6).

11. Tubular connection according to either of claims 9 and 10, wherein the sealing surfaces belong respectively to the external peripheral surface (7) of the annular portion (5) and to the internal peripheral surface (8) of the housing (6).

12. Tubular connection according to one of claims 9 to 11, wherein the first region is located at the free end of the first tubular element, the annular portion forming a lip.

13. Tubular connection according to one of claims 9 to 12, wherein the projecting abutment face comprises an annular tongue (13) projecting axially and a transverse surface (15) connecting the annular tongue to the radially internal surface of the first tubular element and the recessed abutment face comprises an annular groove (14) and a transverse surface (16) connecting the annular groove to the radially internal surface of the second tubular element, the tongue (13) engaging in the groove (14) and the transverse surface of the projecting abutment face coming opposite the transverse surface of the recessed abutment face.

14. Tubular connection according to claim 13, wherein the external peripheral surface of the annular tongue (13) is an extension of the external peripheral surface of the annular portion and the internal peripheral surface of the annular groove (14) is an extension of the internal peripheral surface of the housing.

15. Tubular connection according to either of claims 13 and 14, wherein the radial thickness (e_{d}) of the tongue (13) is substantially equal to that of the transverse surface (15) of the recessed abutment face (9).

16. Tubular connection according to one of claims 13 to 15, wherein the ratio between the height (h_{d}) of the tongue (13) measured axially and its radial thickness (e_{d}) is between 0.8 and 1.6.

17. Tubular connection according to one of claims 13 to 16, wherein the height (h_{d}) measured axially of the tongue (13) is between 0.8 and 3 mm.

18. Tubular connection according to one of claims 13 to 17, wherein the axial height (hᵣ) of the tongue (13) and the axial depth (Pᵣ) of the groove (14) are such that, during screwing together of the threaded connection, the first abutment contact takes place between the free transverse end of the tongue and the base of the groove.

19. Tubular connection according to one of claims 9 to 18, wherein the male element (11) has a recess (21) at the end of the male thread (3) between the thread and male lip (5).

20. Tubular connection according to claim 19, wherein the recess (21) has a depth (h_{g}) at most equal to the height of the male thread turns (3).

21. Tubular connection according to either of claims 19 and 20, wherein the recess (21) has a total axial width (l_{g}) and a depth (h_{g}) such that its axial width is between 2 and 15 times its depth.

22. Sealing-tight threaded tubular connection **characterised in that** it is formed by a threaded tubular connection according to any one of the preceding claims after diametric expansion in the range of plastic deformation, the sealing surfaces shrink-fitting one over another over their entire periphery.

23. Expanded tubular threaded connection according to claim 22, wherein the diametric expansion to which the threaded tubular connection is subjected is at least equal to 10 %.

24. Method of realising a sealing-tight tubular threaded connection, **characterised in that** one starts off with a tubular threaded connection according to any one of claims 11 to 21 known as an "initial tubular threaded connection" and **in that** this initial threaded connection is subjected to diametric expansion in the range of plastic deformation by means of an expansion ball (30) of a diameter greater than the internal diameter (DI) of the tubular elements of the threaded connection, which is moved axially in the threaded connection, the male lip (5) and the female housing (6) being so dimensioned as to undergo together at first, as the ball passes through, elastic plastic deformation, whereas only the female housing then undergoes plastic deformation in the opposite direction of straightening, which finally causes a sealing surface of the female housing to shrink-fit over a sealing surface of the annular portion of the male lip.

25. Method according to claim 24, wherein the deflection of the male lip (5) is defined by the presence of a recess (21) at the end of the male lip on the side of the male thread.

26. Method according to either of claims 24 and 25, wherein the tubular threaded connection realised is of the integral type and the expansion ball (30) is moved from the male threaded element (11) towards the female threaded element (2).
